# EUROPEAN PATENT APPLICATION

(11) **EP 4 535 272 A2**
(43) Date of publication of application: **09.04.2025**
(21) Application number: 24222985.4
(22) Date of filing: 27.10.2023
(51) Int. Cl.: G06Q 40/08

(54) **INTEGRATED SYSTEM AND CORRESPONDING METHOD FOR THE DEFINITION AND AUTOMATED PROCESSING OF NON-STANDARD CONTRACTS**

(30) Priority: 27.10.2022 EP 22204223
(62) Divisional of application: 23206498.0
(71) Applicant: REVO INSURANCE S.P.A., IN BREVE REVO S.P.A., 37135 Verona (IT)
(72) Inventor: DE FERRARI, Fabio, 20149 Milano (IT); GUARIO, Diego, 20149 Milano (IT); PIETROSANTO, Chiara, 20149 Milano (IT); MERLI, Matteo, 20149 Milano (IT); PROSPERO, Alberto, 20149 Milano (IT)
(74) Representative: Botti & Ferrari S.p.A.

(57) **Abstract**

The present invention relates to an integrated electronic system (100) and to a corresponding method for the definition and automated processing of non-standard insurance contracts, of the type comprising:
- data communication means (110) for receiving a request from a user, insurance-service agent or broker;
- at least one database (130) containing at least records of users, insurance-service agents or brokers;
- a plurality of different application programs (APP1, APP2, APP3, ..., APPn) being part of the communication means (110), for managing insurance services accessible by the users and agents or brokers;
- data electronic processing means (300) for selecting at least one insurance contract in an automated or semi-automated form further to said request from the user, insurance-service agent or broker;
- a relational database (50) associated with the database (130) and containing insurance-product data tables interconnected by relations;
- a programming interface (115) configured to acquire the request from the user, insurance-service agent or broker;
- a module (400), associated with the processing means (300), to identify a request for a non-standard contract and to process the request by using the data tables or by generating new data tables with new relations among tables;
- said module (400) being configured to combine at least insurance-service products and guarantees and to start filling in a new non-standard contract further to the processing of said request by sending a corresponding command to a compiler (120) of contractual clauses.

## Description

### Field of application

In its more general aspect, the present invention relates to an integrated electronic system and to a corresponding method for the definition and automated processing of insurance contracts, in particular non-standard contracts.

In particular, but not limitedly, this invention relates to a system and a method that uses the Artificial Intelligence applied to the definition of non-standard contracts, regardless of the use in a specific activity field, even if the following example is calibrated on the insurance field.

### Prior art

In this specific technical field it is known that insurance companies operate in ways that can be defined as consolidated, offering policies that are defined by almost standard contracts to clients.

The policies available to users are actually offered in a fairly limited range of versions that try to cover the most different insurance situations, but they do so with standard procedures and contracts.

Indeed, it is quite complicated to be able to access a policy that covers unconventional risks or in any case not so common to a well-known or profiled by insurance companies catchment area.

The basic problem is given by the fact that it is not so easy for large insurance companies to identify the type of risk to be insured clearly and precisely and this makes them reluctant to deal with problems of potential users who do not fall within the types defined as standard.

Actually, it is not entirely impossible to convince some companies to deal with new risk profiles, i.e. that require a new user profiling and a clear definition of the type of coverage that can possibly be guaranteed through a policy; however, in these sporadic cases it certainly takes a long time, for instance weeks, before the insurance company fully understands the type of risk and consequently formulates a contractual proposal.

In this context, there would be a need to drastically shorten these times in order to meet the changing needs of clients, who would need to ensure new and more modern types of industrial, professional, sport, management, or simply relational activities.

Let us consider, for instance, the need for insurance coverage that arises from new and pioneering industrial activities, from new types of professional services linked to the digital world, from risks associated with newly conceived sport activities or from the management of digital assets on behalf of third parties or from relations arose from joint interests among people.

To speed up the responses of the insurance world to the quick changes in human activities, the prior art already proposes to use electronic means to assist in the preparation and finalization of estimates on insurance products to be offered to clients.

For instance, almost all insurance companies are provided with databases with client records and the types of standard policies subscribed by such clients.

For instance, in recent times, the use of access portals on the Internet, in which a user of a certain insurance company can register and remotely connect to check the expiry date of his/her own policy or access an estimate for the renewal of said policy, has become widespread.

Although advantageous under various aspects, these solutions still offer a deterministic type of interaction mode, in the sense that they allow a user/client only to retrieve information on policies already subscribed or to request a new policy, but always of the standard type.

Currently there are no technical solutions that allow dealing with the management of non-standard insurance contracts, which most distress the insurance companies, through the aid of IT systems that can somehow reduce the response times to users further to specific requests.

The technical problem underlying the present invention is to provide an integrated electronic system and a corresponding method for the definition and automated processing of non-standard insurance contracts, system and method having respective structural and functional features such as to allow minimizing the technical time for the definition and approval of insurance policies of this type.

Another purpose of the present invention is to make the entire process of defining the contractual clauses almost completely automated so that it does not necessarily depend on the skill and/or experience of expert staff or specially trained for the purpose.

A further purpose of the invention is to reduce the management cost of defining and managing non-standardized policies.

Further purposes are to simplify the subscription process of an insurance product by the extensive usage of data, both those available internally in the company and by drawing information from external databases, to manage both parametric and traditional insurance products, to manage parametric mixed insurance products and traditional coverages (for example specialty lines), to manage the work of underwriters and adjusters through the integrated management of communications via e-mail, to automatically read, sort and process incoming mails by organizing and keeping a task list, and to simplify the communication with an intermediary or a client, in order to allow the issue of an insurance contract.

### Summary of the invention

The solution idea underlying the present invention is to provide a combination of technologies based on new generation data and IT architectures, as well as Artificial Intelligence and blockchain technology to operate on the profiles of legal or natural persons, identified by their unique identification codes, such as for instance a VAT number or a fiscal code also through identification with the SPID, and to start an automated procedure which leads to defining a non-standard policy contract further to a specific request from a user.

The solution idea was also to integrate, into a single platform, the vertical functionalities and applications for management of the policy sale, the management of claims and the operational activities of the middle-office/back-office staff, both of the sale departments, known as underwriters, and the claim management departments, known as adjusters.

All the developed software components can be grouped in three categories: main libraries, specialized microservices and company or business microservices.

The platform consists of software libraries suitably developed to cover all the core functionalities of the platform and they form the basic architecture software for the development of any microservice.

Starting with the scaffolding and the core libraries, a set of «specialized» microservices for specific topics/tasks has been developed.

There are finally microservices which incorporate the business logics on which the daily attention of programmers is placed in order to satisfy the user's needs. These microservices also begin with the suitable architectural framework.

More particularly, the solution idea consists in providing a product or intermediate software layer, or that could be defined as middleware, since it is intended for use at an insurance-service manager, joining software products already in use at insurance companies and capable of communicating with such products and the already existing architectures or infrastructures in order to decouple them when necessary and also to exploit their component parts just on occasions in which a non-standard policy needs to be defined from scratch.

In other words, the concerned software product has the purpose to being housed as a new component at a high-level manager or provider of new insurance products in order to interact with the existing systems so as to allow the coexistence between conventional processes (called Business As Usual), managed by normal insurance companies, and new processes (called New Business), for which the new software product is intended to take over, providing the users in almost real time with a non-standard policy proposal that is calibrated and approved based on the new needs expressed.

The above said technical problem is solved by an integrated electronic system for the definition and automated processing of non-standard insurance contracts, of the type comprising:
- data communication means for receiving a request from a user, insurance-service agent or broker;
- at least one database containing at least records of users, insurance-service agents or brokers;
- a plurality of different application programs belonging to said communication means, for managing insurance services accessible by said users and agents or brokers;
- data electronic processing means for selecting at least one insurance contract in an automated or semi-automated form further to said request from a user or an insurance-service agent or broker; characterized in that it comprises:
- a relational database associated with said database and containing insurance-product data tables interconnected by relations;
- a programming interface configured to acquire said request from a user, insurance-service agent or broker;
- a module operating based on Artificial Intelligence, associated with said processing means, to identify a request for a non-standard contract and to process said request by using said data tables or by generating new data tables with new relations among tables;
- said module being configured to combine at least insurance-service products and guarantees and to start filling in a new non-standard contract further to the processing of said request by sending a corresponding command to a compiler of contractual clauses, combining insurance-service products and guarantees, based on said data tables of insurance products interconnected by relations and based on said new data tables with new relations among tables.

Advantageously, the integrated electronic system comprises a macro-block or product engine capable of creating a new product using existent components, creating a new product by creating new components and duplicating an existing product, according to the cloning logic using basic entities which make an insurance product configurable, such as questionnaires and checklists for example data collection module, made up of a plurality of panels, several questions, a stipulation questionnaire, management of the dynamic attachments, policy documents based on dynamic templates are present on each panel.

Furthermore, said macro-block comprises a document composition tool module or Tool Document Composition - TDC, which is able to manage the insurance contracts pertaining the new products in real time, starting from a database of chosen and validated clauses accessible by subscribers for insertion and use.

Advantageously, the aforementioned relational database contains tables relating at least to: insurance products, guarantees, attributes of such guarantees and contractual clauses, having relations with data of said records.

Moreover, the aforementioned modules are associated with a blockchain module configured and adapted to ensure the confidentiality and certainty of the data relating to the parametric guarantees, as well as the automatic liquidation of the agreed reimbursement upon the occurrence of a specific event covered by the concerned guarantee (parametric guarantee).

Advantageously, the module is also operating based on Artificial

Intelligence to facilitate and also automate the communication operated via unstructured channels (for instance via email) and is part of a software layer of the middleware type configured at an insurance-service manager and also provided with a plurality of communication means that are compatible at the middleware level with the several application programs.

It should be noted that the communication interface is configured as a set of APIs coordinated by an API Gateway with a plurality of interface applications adapted to exchange data in a format compatible with said data communication means.

There is also a single block of identity identification of said users, agents or brokers which said data communication means refer to and which uses JSON Web Tokens (jwt) codes for access authentication. This identity identification also provides for a verification procedure from an external source, such as for instance the certification of personal data through unique identification codes such as the SPID or VAT number by a direct channel verification census.

The technical problem is also solved by a method for the definition and automated processing of non-standard insurance contracts, comprising the steps of:
- receiving a request for an insurance coverage contract from a user, insurance-service agent or broker, by an integrated electronic system associated with data communication means or application programs of insurance services;
- verifying in a relational database, with data tables interconnected by relations, whether said request is of the non-standard type;
- activating data electronic processing means associated with a module also operating with Artificial intelligence, further to said verification;
- processing said request for a non-standard contract by said module by using the data tables of said relational database or by generating new data tables with new relations among tables;
- filling in a new non-standard contract by said module operating with Artificial intelligence, if the communication comes from non-structured channels, to combine insurance-service products and guarantees and to start filling in a new non-standard contract.

Further features and the advantages of the system and method according to the invention will become apparent from the following description of an embodiment thereof given by way of indicative and non-limiting example with reference to the enclosed drawings.

### Brief description of the drawings

- Figure 1 represents a schematic-block view of an integrated electronic system made according to the invention for the definition and automated processing of non-standard insurance contracts;
- Figure 2 represents a schematic-block diagram of a relational database containing data tables interconnected by relations and relating to a product modeling portion of the system of Figure 1;
- Figure 3 is a schematic view of a data processing electronic system and of constituting parts thereof being part of the integrated system of the present invention;
- Figure 4 shows a schematic view of an access mask to an application program in use in the electronic system of Figure 3;
- Figure 5 shows a schematic-block view of a portion of an integrated electronic system of Figure 1 according to an aspect of the present invention;
- Figure 6 shows a portion of the relational database of Figure 2 which illustrates the relations among tables of insurance products and policy agreements;
- Figure 7 shows a further portion of the relational database of Figure 2 which illustrates the relations among workflow tables;
- Figure 8 shows an evolution-state schematic view of a set of data processing performed by a product engineer and potentially also by an Artificial intelligence module incorporated in the integrated electronic system of the present invention;
- Figure 9 shows a further evolution-state schematic view of a set of further data processing performed by a product engineer and potentially also by an Artificial intelligence module incorporated in the integrated electronic system of the present invention;
- Figure 10 shows a flow chart which illustrates the steps of the method of the present invention in schematic blocks.
- Figure 11 shows a scheme showing components which interact with the *InMailXpert* module;
- Figure 12 shows a scheme of the activities managed by the *InMailXpert* module;
- Figure 13 shows a scheme of the processing of the contracts by a blockchain module;
- Figure 14 shows a scheme of the interaction of the blockchain module with an oracle;
- Figure 15 shows a flow chart of the claim *OverX* module; and
- Figure 16 shows a scheme showing the components which interact with the virtual assistant module.

### Detailed description

To better understand all of the aspects of the present invention, it is first necessary to briefly review the ways in which a policy request is normally made by a user wishing to obtain coverage with insurance services for a specific activity that involves entrepreneurial, professional, or personal risks.

Usually, a typical insurance subscription process requires a client to contact an insurance agency or insurance agent or broker to obtain insurance, for example for a commercial enterprise and, after discussing own needs with the broker and determining the type and the coverage amounts for that activity, the client formalizes an insurance application. The application may also be submitted through the broker to multiple insurance companies. In addition, the application could be a paper document sent by email, post, fax, or other means of communication, or could be an online electronic questionnaire filled in electronically by a computer application.

The present invention is based on a preventive modeling of insurance products currently defined as "Special branches" and "Parametric products" and on the automated processing of data that lead to the start-up and development of a budgeting process with final issue of specific and non-standard policies, in particular but not exclusively for special branches and parametric policies.

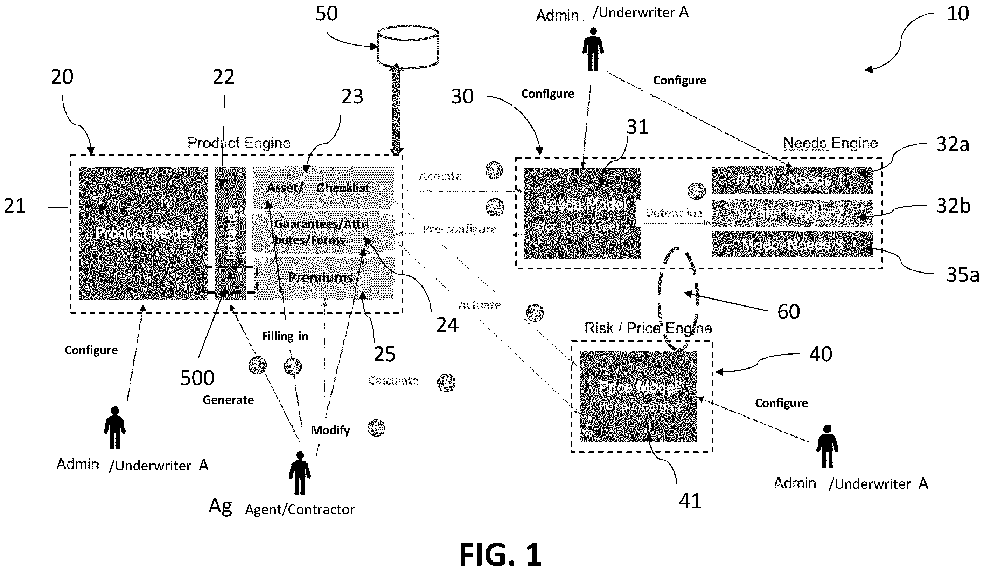

With particular reference to the example in Figure 1, during the modeling step three main macro-blocks have been identified and defined, which will be illustrated and detailed herein below.

In Figure 1 an integrated system for an innovative management of insurance contracts is indicated in schematic blocks and as a whole with reference number 100, the integrated system comprising:
- a first macro-block 20 or product engine, which concerns a product modeling step,
- a second macro-block 30 or needs engine, which concerns a step of modeling risk profiles or in any case insurance needs, and
- a third macro-block 40 or price engine, which instead concerns a phase of definition of the price list or of at least one installment of the insurance premium.

Let us now see how these macro-blocks interact with each other.

The first macro-block 20 can be defined as the application environment that manages the insurance product, its life cycle, rules, and methods for the processes involving the product. This macro-block contains a portion 21 configured and adapted to the modeling of insurance products, which comprises:
a software tool, which will be called "Dashboard Product Engine", of the control panel type, which allows a system administrator with insurance skills, the "product engineer" (indicated as "Admin/Underwriter A" in the figure), to create a new product in real time without the development of information code. More particularly, in the case of development of new products for market segments, this module may evolve into an Artificial Intelligence ("AI") or machine learning module which, further to specific requests, will be able to define a new insurance solution based on the previous information already present in memory and on a predictive algorithm that will allow defining and managing the modeling of new insurance products, exactly as it is currently carried out by the product engineer; the product engine is made of several parts, such as relational and non-relational databases, services accessible via API and a designated front-end running on PC;
at least one policy contract, which will be called "Sales Frontend", which is automatically generated by a compiler 120 that will be dealt with later on based on the configurations of the individual products and that can be used by both an agent and a broker or possibly also by policy holders.

In macro-block 20 a processing/computation module 22 is provided for, which is intended to interface the modeling portion 21 with other portions 23, 24, and 25 of macro-block 20 which are detailed herein below.
- A census portion 23 that is structured and interfaced with an independent relational database for the census of the insured assets and is also adapted to the collection of the information necessary for the calculation of the risk and policy premium in relation to the assets recorded. This portion 23 is labeled as Asset/ Checklist.
- A further modeling and management portion 24 of the policy attributes (Guarantees, Limits, Forms of insurance, Overdrafts, etc.), in turn configured as a relational database. This portion 24 is labeled as Guarantees/Attributes.
- A display portion 25 that is configured for structuring the policy premiums calculated by the Price Engine macro-block 40. This portion 25 is labeled as Price.

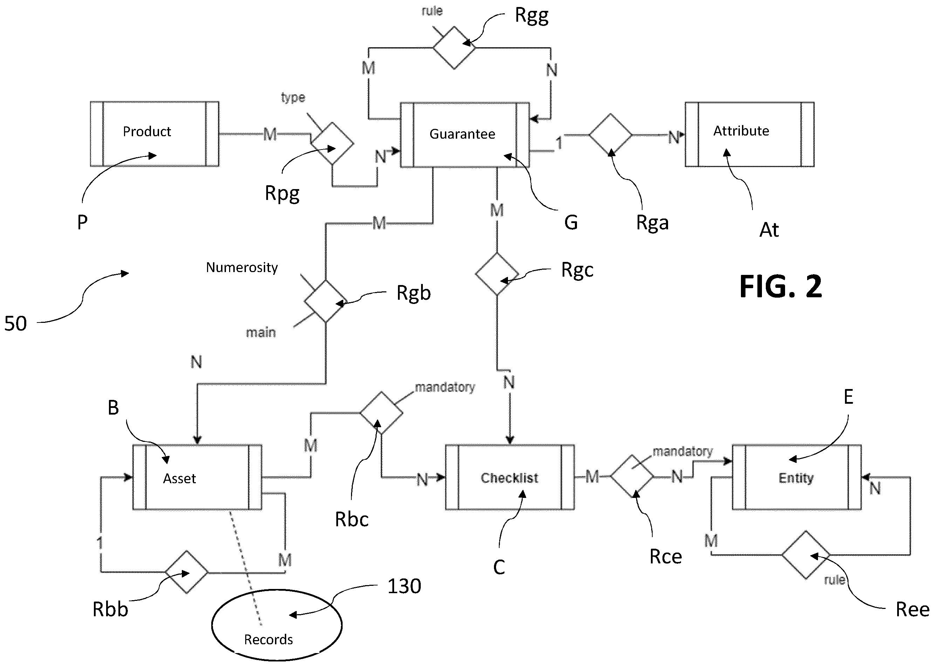

The relational database containing the insurance products and solutions, and any insured assets (as in the case of a "property" product) is structurally independent and in two-way communication with the macro-block 20, as indicated in the figure with reference number 50. The detail of the data structure of this database is represented in Figure 2.

The Artificial Intelligence ("AI") is often defined as advanced software that can simulate human thought processes in order to complete basic, often long, tasks and to generate relevant and precise results in less time compared to what could be done with a manual analysis. The Artificial Intelligence allows a computer to learn from the experience of previous processing and to hypothesize a behavior to be followed further to new inputs.

In the context of the present invention the Artificial Intelligence and the Machine learning portion are the basis of some functions of the platform and through data analysis they allow the automatic reading of unstructured communications (e.g. emails) and in the future they will allow making complex risk analyzes, dynamic pricing and anti-fraud controls in real time.

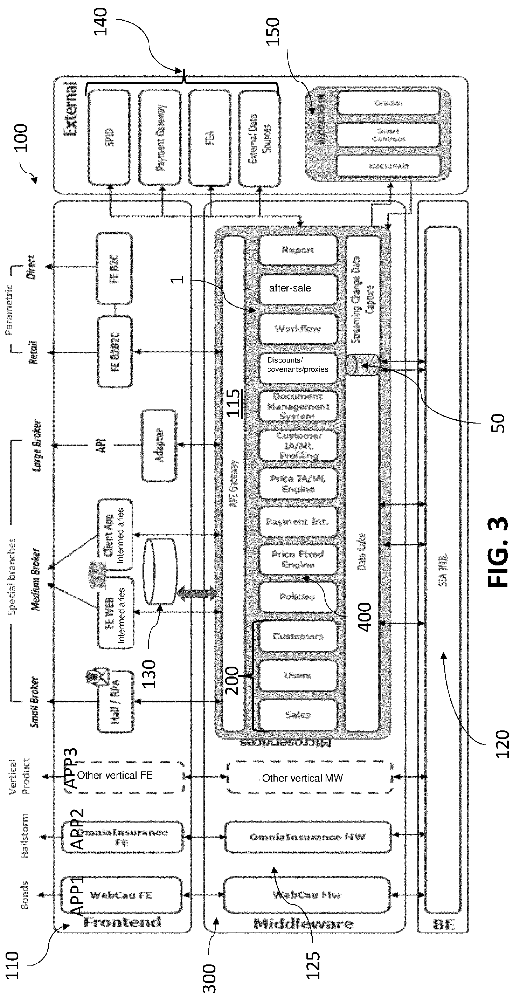

In the present invention the Artificial Intelligence is used to estimate the data relating to the company, and necessary for the risk quotation, for instance as represented in block 130 of Figure 3, which is accessed for instance through the "FE Web Intermediaries", and to automatically read the communications received by e-mail, as represented by the "Mail/ RPA" block in Figure 3.

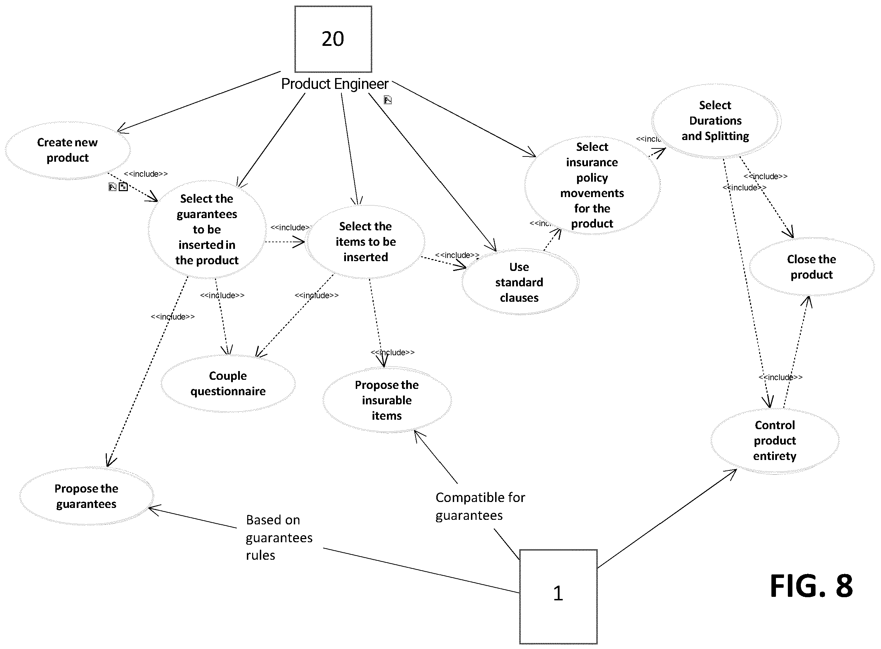

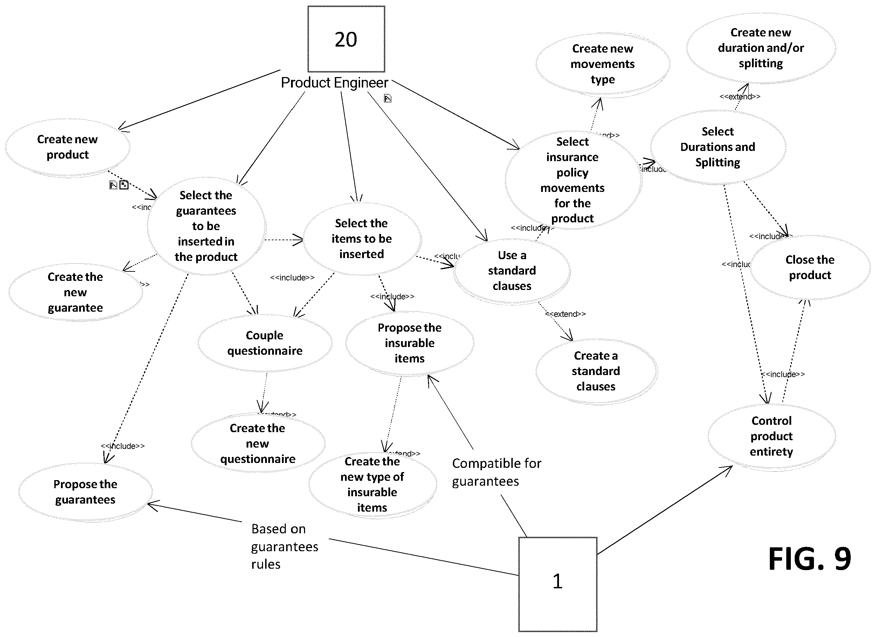

It is also desirable to resort to Artificial Intelligence also for the activities that a product engineer can currently carry out, as represented in the following Figures 8 and 9, or again for the role of underwriter A in Figure 1 (block 20). In other terms, the AI may be used for the automatic configuration of a new insurance solution, or of a new insurance product, based on the identified needs.

More particularly, macro-block 20 is capable of allowing the creation of new insurance products according to at least the following methods:
- Creation from scratch of a product using the existing components;
- Creation from scratch of a product with creation of new components;
- Creation by duplication of an existing product (in any state).

In the case in which in macro-block 20 operates on a product from scratch, not deriving from other existing products in the catalog, it will still be able to process objects and modeling definitions, connecting components present in the tables following the logics and relations that will be described herein below.

In particular, the macro-block 20 or product engine are based on the concept that an insurance product is made starting from reusable components by limiting the development code to the possible creation of new basic components (front-end, integration logic, application logic, back- end components and architectural components).

The macro-block 20 is based on a software engine that allows each type of insurance product to be structured into derived models according to the cloning logic, enabling the industrialization of the components, thus developing different entities; in this way, a rapid creation of insurance products is achieved, using a «templating» model. The engine lends itself to the introduction of new architectural components in the event that products are developed that require the introduction of logics and/or services that are not present in the developed services or components.

The basic entities, which make an insurance product configurable and are managed within the product engine 20, are questionnaires and checklists, such as a data collection form, made of a plurality of multiple panels, several questions, a stipulation questionnaire, management of dynamic attachments, policy documents based on dynamic templates are present on each panel.

The user interface part is based on an open-source module called Form.IO, while the data model makes heavy use of schemas based on json paths.

The questionnaires that characterize the insurance policies can be associated with products, data collection module questionnaire, stipulation questionnaire, guarantees, conditions, in which it is also possible to insert a list of ATECO codes to run filters, and insurable items, these also having a filter mode that allows influencing the visibility of an item based on external data.

A module called Document Composition Tool or Tool Document Composition - TDC is integrated with the product engine 20, said module being capable of providing the insurance policy management system with contracts pertaining new products, in real time and without the need for a code development. The TDC is made up of several parts, including, among others: relational and non-relational databases, services accessible via API and a designated front-end.

The TDC is a digital tool that allows underwriters to modify the insurance policy and all its clauses in order to create a tailor-made insurance in real time. It features a large database of selected and validated clauses accessible by subscribers for input and use.

Actually, the second macro-block 30 or needs engine is a system for profiling a policy Contractor based on questionnaires to be submitted to the Contractor himself and contains a portion 31 configured and adapted to model risk profiles or any way insurance needs which includes:
a software tool, which will be called "Dashboard Needs Engine", of the control panel type, which allows a system administrator or underwriter A as reported in the figure (or product engineer) to define the modeling and calculation of the needs index associated with the individual guarantees, such as for instance:
∘ The management, tracking of changes and modeling of the calculation rules of the insurance need starting from the census of the asset/checklist.
∘ The reference to more complex risk calculation rules through a specific ad-hoc algorithm implemented by a developer on individual productivity tools.
∘ The definition of needs profiles for individual guarantees that can be associated with specific ranges of the need index.
∘ The definition of pre-configurations of policy attributes (selected guarantees, specific values of maximum limits, deductibles, etc.).
∘ The association of individual needs profiles to pre-configurations of the policy attributes.

There are also multiple modules 32a, 32b,..., 32n, which contain the risk profiles or in any case the requirements/needs associated with the individual insurance guarantees; as well as multiple modules 35a, 35b,..., 35n, which contain the respective models of these risk profiles.

It should also further be noted, which is very relevant, that a pre-configuration associated with the need index calculated in real time during a policy sale process may determine a pre-compilation phase in the policy contract or "Sale Frontend" including the policy attributes that are visible and configurable by an intermediary Ag. This feature allows automating and greatly speeding up the entire cycle of preparation of an insurance solution, from the configuration thereof to the system, to the preparation of the contractual documentation.

The third macro-block 40 or Price Engine is a tariff engine which, based on the technical variables and technical constants linked to the guarantee and the insurable item, is able to calculate the premium and its accessories and contains a portion 41 that is configured and adapted to modeling and economic calculation of the risk index and the premium associated with the individual guarantees, which includes:
a software tool, which will be called "Dashboard Price Engine", of the control panel type, which allows a system administrator or underwriter A to:
∘ Manually configure the calculation formulas (if elementary operations) of the policy premium for each guarantee starting from all the data collected and the need indexes generated by the Needs Engine macro-block 30.
∘ Refer to more complex calculation rules of the premium through a specific ad-hoc algorithm implemented by a developer.

Also in this case, the policy premiums calculated in real time during the sales process must therefore be displayed in a policy contract or "Sale Frontend" made available by a compiler.

There is also an additional component, indicated with reference number 60, which can be defined as a variable manager. This component 60 is a module used in parallel with the Needs Engine 30 and Price Engine 40 and includes:
- a "Variable Manager Dashboard" for the calculation and management of complex variables obtained from processing starting from the elementary variables of the system and necessary for the calculation engines of the policy premium and the client's insurance needs; and
- a process flow processor or Workflow, that is an engine adapted to govern business processes and that allows avoiding the wiring of a specific process in the system's software. The used solution makes extensive use of Workflow logic processes since they significantly reduce the use of programming and significantly reduce the time to market of a process.

Now, with more particular reference to the example of Figure 2, we will analyze in greater detail the relational database 50 containing the data tables interconnected by relations and relating to the modeling phase of the insurance product of the related insured asset (such as, for instance, in the type of insurance known as "property"); we will then review some tables that are used to define the product model as part of the first macro-block 20.

To better understand the interactions between these entities, a block diagram of the E-R type has been used in Figure 2, i.e. an entity-relation model that is widely used in computer science for the design of a database and in which the information resulting from the analysis of a certain domain have been translated into a conceptual diagram, called entity-relation diagram. In other words, the E-R model was considered the most suitable to illustrate the conceptual design phase of the process of the present invention.

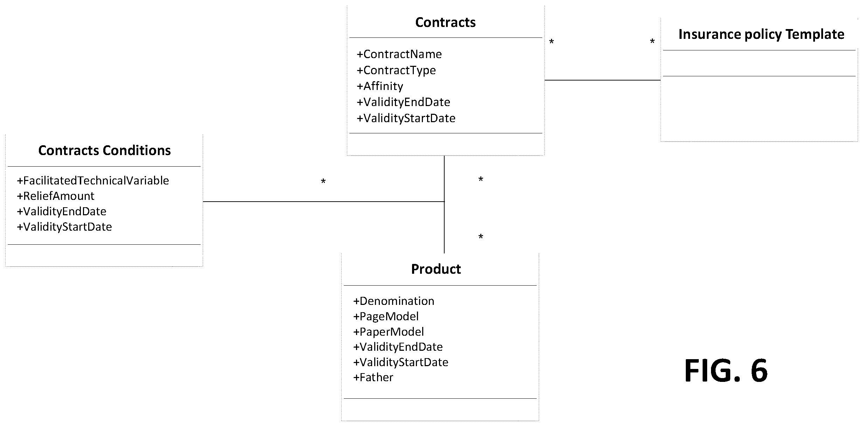

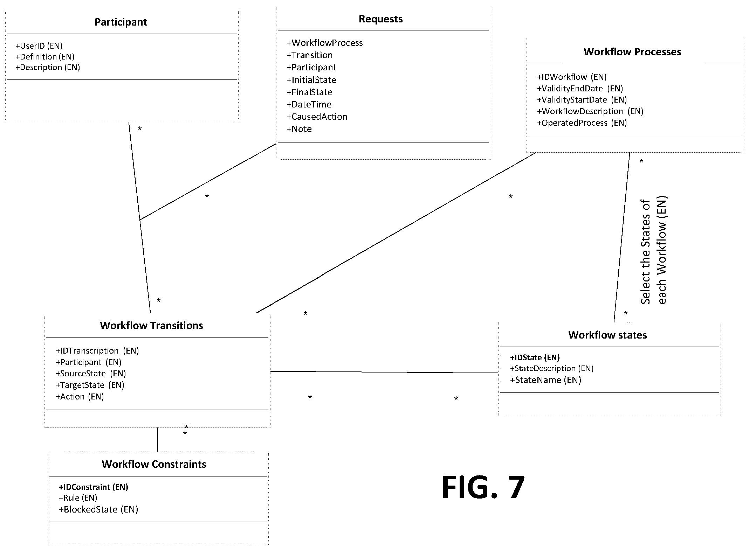

Similarly, Figures 6 and 7 represent relations and in particular: Figure 6 the description of the relations existing between an insurance product and the sales agreements, and Figure 7 the description of the relations between the entities that describe the business processes in the workflow.

Referring to a generic insurance product P, the software tool of the first macro-block 20 allows storing a series of products in tabular form, identifying each of them by attributing a specific access key ID code, associated with a series of other data that can vary from an identifier to a risk code. A generic product P may also be associated with some operations such as for instance: Sale, Replacement, Cancellation, etc. The related table is structured as a table of a relational database incorporating at least one pointer to other tables of the same database.

The information relating to the tabular list of products must also be associated in a relational way with a record module in order to allow the selection of only some records when choosing a policy holder.

As for another table relating to insurance guarantees G, it is also possible for them to collect a set of identifying information in the table format. For instance, beyond a conventional identification with an access key ID code and a name and description, it is necessary to define the insurance branch which each guarantee is intended to. The branch must be specified in the table so that multi-branch products can be managed. The specific branch of the guarantee must therefore be used for the calculation of the taxation that can be different for each insurance branch.

It is also important to consider the RPG relation among products and guarantees since guarantees may be associated with multiple products in different combinations. For instance, an RCO guarantee could be mandatory in an RC business policy but considered as optional in a fire policy. The type of guarantees will also affect the display of the questionnaires of the same and of the attributes within the policy contract or "Sale Frontend". By way of indicative and not limiting example, it should be noted that the types of guarantees that can be associated with a product may be:
- Mandatory main guarantees (main_mandatory)
- Optional main guarantees (main_optional)
- Secondary guarantees (secondary) - always to be considered optional
- Policy conditions - always to be considered optional
- Conditions always operating - to be considered always mandatory but without attributes and not to be displayed on the FE. They are only useful to be connected to the policy template

In some products (precisely like the "property" type) there is also a relation between guarantees and insured items and between guarantees and assets and in general there can be relations among guarantees since it is possible to create complex hierarchical structures of guarantees (e.g. specific rule). For instance, a Fire and Explosion guarantee is made up of at least four "items": Building, Goods, Damage to third parties and Machinery. Or the Civil Liability guarantee can be associated with the "Legal Expenses" guarantee.

In this case, the parent guarantee will be recorded with simple attributes and will be associated with other "n" guarantees through the guarantee table.

On the other hand, Attribute At is considered to be any entity associated with a specific guarantee (and not with an insured asset) that constitutes a choice or a decisive option for calculating the insurance risk and the related policy premium. The concept of attribute must be kept as generic as possible during the implementation phase in order to be able to add new types of attributes on new guarantees without necessarily having to carry out new implementations. It is important to take a census of all of the possible types of attributes and to possibly extend the list with new attributes; furthermore, the use of a unique key will allow the comparison of similar attributes between different guarantees.

Therefore the following are to be considered attributes of the guarantee (always in a non-exhaustive way):
- Sum insured
- Fixed deductible
- Minimum deductible
- Deductible percentage on compensation
- Maximum limit
- Maximum limit on claims
- Maximum limit on persons
- Maximum limit on things
- Row percentage overdraft
- US percentage overdraft
- ROW minimum overdraft
- US minimum overdraft
- Form of guarantee used (Property, Rental Risk, Value in use, Original value, etc.)

The Rga relation between a guarantee and the attributes is 1-N thus every time a new guarantee is created or an existing one is duplicated, the attributes must also be defined from zero or duplicated by an existing guarantee. There must never be a sharing of attributes between different guarantees.

In the table of attributes there is also a range_type field that identifies the type of control that must be inserted into the policy contract, or "Sale Frontend" associated with the single attribute. More in detail, the range_type can be of the type:
- free: the user can select any value within the range defined in the "range_min" and "range_max" fields. A free input with validation will then be used;
- select: the user can select a value from n defined within the range_list field;
- select free: the user can select a value from n defined in the range_list field and choose manual entry. In this case, the user can select any value within the range defined in the "range_min" and "range_max" fields.

Now let us see the other parts making up the flow diagram of Figure 2.

"Asset" B is considered to be an entity that can be isolated and independent of product P but can be associated with a specific estimate and/or with a specific record. Therefore it must be considered an autonomous entity that can be reused on multiple policy estimates (associated with individual guarantees) and associable over time with different records.

Figure 2 indicates with reference number 130 a database of records that has to be considered strictly associated with the relational database 50. However, the record database could also be a conventional pre-existing database at a specific insurance company and not necessarily of the relational type from the point of view of the records.

However in table B a reference key is provided for the registry that "owns the asset". That is, such a field also allows relating to a record table of the pre-existing type.

Such a field may not be filled in if the asset is not explicitly associated with a specific registry.

The census of the asset at first instance will almost always take place during the estimate phase, but an entity must be automatically recovered on new estimates in case it had already been registered.

Non-exhaustive examples of assets are:
- Activities
- Building
- Home
- Car
- Pet
- Goods
- Employees of a company
- Class of employees of a company

An asset B is registered by an intermediary or has been pre-valued in advance and constitutes one of the main data sources for the calculation of the insurance risk and the related policy premium.

For each asset B there is an Rgb relation with the Guarantees G, that is to say that the number represents the number of assets that can be registered for a specific policy guarantee. For instance, for a "Building" guarantee of the "Fire" policy it should be possible to register more than one building associated with the company.

The number can therefore have value:
- "1" - if the asset must necessarily be registered only once
- "0-1" - if the asset is optionally registered once
- "1-n" - if the asset is mandatory but if registered it can be registered more than once
- "0-n" - if the asset is optional but if registered it can be registered more than once.

Moreover, another value of the relation table can be a Boolean value that indicates whether asset B is considered primary for the guarantee in relation to Rgb. This attribute will condition the display of the "Sale Frontend" produced by the compiler 120. In the case of main a true and multi-asset (number 0-1-n), indeed, the premium calculation phase will show the list of the individual assets and for each of them the list of the associated guarantees.

A relation of the Rbb multiple type is also provided, which can be defined as internal, in the sense that it allows building a hierarchy of assets. For instance, the Company Employees asset could be classified with:
- Executive
- Directors
- Managers
- Employees

Each of these four classifications or classes could be represented as an "Employee class" asset valued with different values.

Instead *"Checklist"* C is considered a module containing a set of pre-existing questions, answers and/or information that make up a self-consistent information module of the system, generally necessary for the estimate of the insurance risk connected to a guarantee or asset. An asset B can therefore be defined as the set of checklists (mandatory or optional) that describe, with several questions, different features of the asset.

A checklist C is not necessarily associated with a specific asset B, but in some cases it can be a separate component associated with a guarantee. Indeed, the relation Rbc between asset and Checklist is of the multiple type.

For instance, the "Building" asset could consist of the following checklists:
- Location of the building (mandatory for the guarantee "Fire")
- Structure of the building (mandatory for the guarantee "Fire")
- Machinery contained in the building (mandatory for the "Machinery, Equipment and Furniture" item but not for the "Building" item of the guarantee "Fire").

Moreover, for the "Machinery, Equipment and Furniture" item we also wish to record, for the calculation of the risk, a checklist C linked to the "Behavior of the employee during the movement of flammables". This checklist will not be linked to the "Building" asset and in general to any asset but just to the "Fire" guarantee.

For the Checklist as well, an Rgc relation with the guarantees, similar to the one existing between guarantees and assets, is provided.

Finally, an "Entity" E is an atomic unit of the checklist. That is, it allows identifying a single piece of information associated with the checklist and can be represented as a "question" of the checklist to be addressed to the intermediary or to be pre-filled in starting from the existing information on the system. It is possible for an Entity E to be made up of several questions, but which together can be associated with a single information unit.

For instance, let us consider the following three questions that could be asked to an intermediary or a contractor in the definition phase of the Entities.

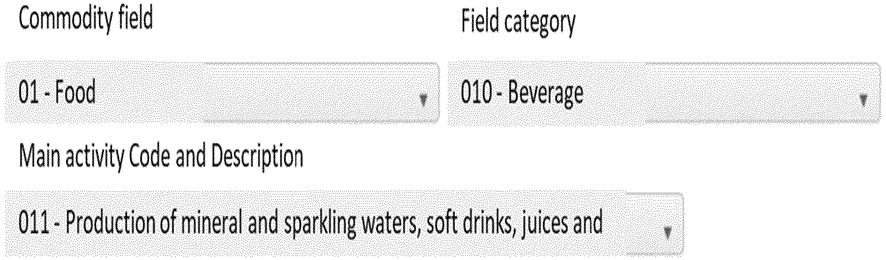

For instance the selection of the "Commodity Field" of the "Category" and the "Activity Code" of a contracting company, even though they are represented as three different and dependent questions, are used to extract a single system information (The company's Ateco code).

Another possibility is represented by a location field that allows, starting from the insertion of a self-filled address, retrieving specific information about region, province, postcode and displaying the positioning map of such an address.

The individual Entities may have dependencies and correlations between them, for instance as represented in the figure by the Ree relation.

For instance, in case of affirmative answer to a question it could be necessary to delete a section of the checklist or modify the possible values of a certain Entity. The following table will be used precisely to describe these relations so as to reflect on the experience of filling in the checklist on the "Sales Frontend".

There is also a multiple Rce relation between Checklists C and Entities E, similar to the one between products P and guarantees G.

Now with reference to the example of Figure 3, we will analyze in greater detail the software portion or layer of the computer program adapted to implement the method of the present invention.

As previously stated, the idea underlying the present invention starts from having devised a software product or layer or platform, of the middleware type, which is intended to be inserted between software products already in use at insurance companies and capable of communicating with such products of the already existing architectures or infrastructures to decouple them if necessary and/or to also exploit their component parts when it is necessary to define a non-standard policy from scratch.

The middleware platform is provided with a workflow engine, an access to a blockchain and an access to a large data repository, defined as a module 400 or Data Lake pre-populated with all the data that are deemed to be relevant for risk estimation and policy subscription.

The module 400 can define and produce a new insurance contract further to a new request from an insurance-service user, agent or broker by combining insurance-service products and guarantees, based on insurance product data tables interconnected by relations and based on new data tables with new relations between tables.

This middleware platform, which is schematically illustrated in Figure 3 with reference number 1, is installed at a higher level insurance-service manager compared to already existing systems, for instance of well-known insurance companies, in order to allow the coexistence between conventional processes (called: Business As Usual) and new processes (called New Business), for which it is intended to intervene as if it were operationally a coordinator of old and new modules.

The middleware platform 1 provides the following services (via APIs):
given the identification of an insurance product, it allows the configuration thereof;
given the identification of a client with an insurance product, it provides all data for the subscription of the insurance product for that client;
given the subscribed insurance product and the client (the subscriber), it enables the dynamic preparation of the contract associated with that insurance product for that client;
it enables the fully digital subscription of the contract referred to in the previous point; finally, the contracts can be printed or digitally archived;
it allows the configuration and subscription of parametric insurance products using external "oracles" as "triggers" in order to understand, for a certain insured, whether the "event" occurred or not, using a blockchain to manage the automatic payment of cases in which an "event" occurred, using the Smart Contract structure of the blockchain;
it allows the configuration of insurance products with a mix of traditional and parametric insurance coverage, for example earthquake coverage with a parametric mix - for emergency expenses, and a traditional mix - for the request for compensation for damages, coverage;
it enables the automatic execution, date of a specific insurance product chosen by a specific client, of a pricing model, with the automatic rating of the risks associated with that product, thus allowing the automatic preparation of the final contract which must be signed by the client.

The middleware software layer 1 cooperates and interacts with other internal and external components even of other insurance companies and contributes forming an integrated system 100 adapted, according to the invention, to the definition and automated processing of insurance contracts, in particular non-standard contracts, comprising specific specialized operational modules that allow managing other management phases of the sale process of a policy.

In particular, the integrated system 100 comprises a range 110 of various heterogeneous components which are grouped together in a front-end system, that is, that are intended for interaction with the insurance world by users, clients, agents, brokers, and possibly other insurance companies. These several components include communication tools, software application products, or interfaces already present between application products to allow interaction between them. The front-end system works on PCs and mobile phones and is built with a modular software system that allows adapting the user experience to the specific case.

For instance, a first type of application product APP1 [i.e. WebCau already available to a user of the Applicant's system] can be accessed directly by a user through a simple registration request and access authentication. This APP1 application product is intended as an application program already available to users at a certain insurance company.

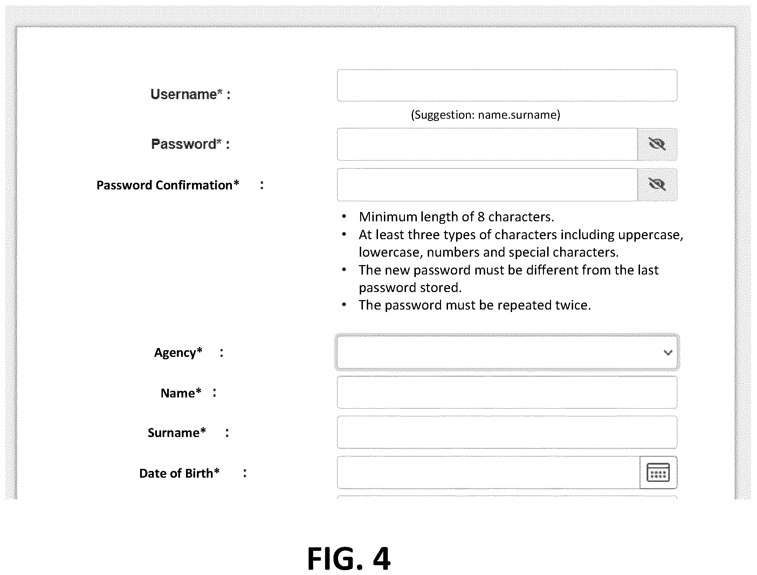

In Figure 4 a conventional access mask of the APP1 application product is shown by way of example, which allows an already registered user to access data and/or insurance services.

"User" can indicate generally and in a broad sense: an insurance intermediary, a sub-agent, or a collaborator. Normally, agents are preloaded through a user interface by an administrator who also assigns the roles thereof. Analogously, the users of sub-agents or collaborators can be defined in advance, or an access form can be filled in autonomously, which is then approved by the insurance company, or rather by the insurance services manager.

A client can also be accredited in the same way, after filling in a first access form.

Once a user has been created, he can proceed using the APP1 application product.

However, in the case of a second type of application product, for instance APP2, managed by a subsidiary or another insurance company, it is possible that the modes of accreditation of a user may be procedurally different and requires, for instance, a paper-based registration method with keeping the original of the access request form in the paper archive.

A further type of insurance product, for instance APP3, could even provide that there is no persistence of user information in the system but that it is possible to access data and information on the policy through the identification number of a policy. In this case, there are also no system administrators who define user roles. Other APPn application products may be present depending on the context of the integrated system 100.

Other conventional access modes are available to so-called insurance brokers who, depending on their size (small, medium, large) have communication means at their disposal which can vary from simple emails to Web applications intended for intermediaries, or through programming interfaces known as API. As it is known, an API (Application Programming Interface) is a computer interface program through which it is possible to solve a specific communication problem between several computers or between several software. The API forms an intermediate layer between the front-end and the middleware which allows the functionalities of the two application layers to be decoupled and enables external systems to access the middleware services without necessarily using the front-end.

In the range 110 of Figure 3 there are also two FE blocks which indicate the possibility of using a Frontend (FE) towards B2B entities and B2B2C FE, which in fact represent the usual modes of interaction with the business environment. In our Country, indeed, the corporate world is traditionally divided into two categories: B2B companies, which sell their products/ services to the final consumer, and B2C companies, which sell to other companies. This distinction has been very useful so far in describing a reality that today is much more complex and that has much more blurred boundaries between the several companies.

Purely by way of reporting, it is recalled that the network and digital technologies have led to the birth and consolidation of new business models: for instance called Business-to-Business-to-Consumer (B2B2C) which describe a business world in which the similar and complementary logics of B2B and B2C models interpenetrate. Companies are often interested in insurance solutions of the parametric type.

The middleware software layer 1 of the present invention that exploits and interacts with all of the various heterogeneous components of the Frontend 110 range belongs to the context just described. An intermediate range 300 of data electronic processing means is provided downstream of the Frontend range 110. These data processing means 300 are conventional and may be considered common to various application products used in the insurance world. They are possibly different for different insurance companies.

A middleware software layer 1 is instead provided as an intermediate component at a higher level insurance services manager.

Advantageously, according to the invention, the middleware software layer 1 comprises an interface portion 115 defined API Gateway which is configured to exchange data in a compatible format and therefore to communicate directly and independently with most of the communication components of the Frontend 110 range, with the exception of the application products APP1, APP2, APP3, ..., APPn, with which it communicates in any case at the middleware level with other modes which are dealt with herein below.

Well, the invention also proposes to remedy all these varied ways of accessing the insurance services manager by providing the middleware software layer 1 with the portion 115 of the API Gateway interface that allows communicating both with all of the several interface computer programs and with all of the various and heterogeneous external communication means, to automatically make the input information available to the middleware software layer 1.

Basically, in the API Gateway interface 115 there are interfaces adapted for the management of email communications, others for the collection of information received via the Web, still others received via API interfaces available to insurance brokers, as well as further interfaces to the business world.

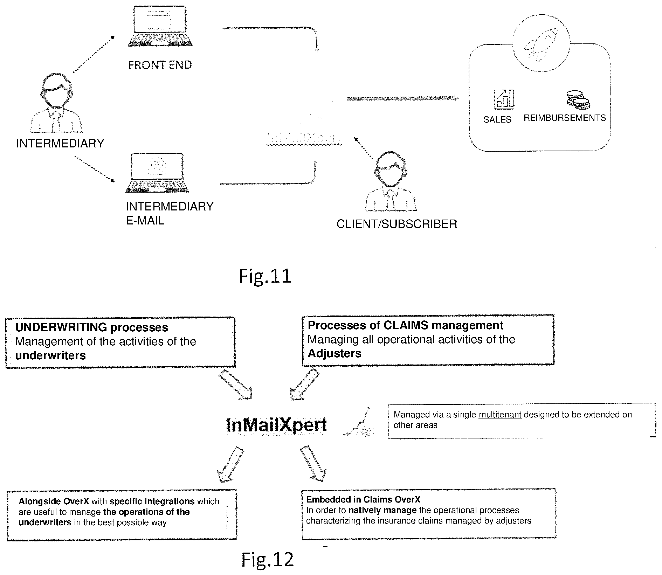

In particular, the modular incoming mail system, called InMailXpert, as shown in figures 11 and 12, powered by an artificial intelligence engine is capable of automatically receiving and reading mail, including the key elements of the content, both in the message and in the attachments; automatically replying, in some cases, to these emails; classifying and organizing received emails into activities, new or associated ongoing negotiations and displaying the resulting activity in the policy activity list; under certain conditions, it is able to completely process incoming mail until a fully digital supply contract file to be digitally signed is obtained; this contract will be automatically sent to the intermediary or to the client for the fully automated mode of product sale and contract subscription.

From a functional point of view, InMailXpert enables the management and execution of work tasks that characterize the operation of any back-office and middle-office process, and it is able to manage the requests for policy estimates that intermediaries send to the company's underwriters.

In this context, the channel through which the intermediaries send requests is e-mails and the task manager is central in the management of e-mails through the following functions: downloading e-mails from the mail server and creating new tasks, one for each new received email; automatic classification and indexing of emails through the use of an integration with OpenAI; assignment of the tasks to individual underwriters for the processing; native integration with Sales OverX for the automatic creation of a new policy proposal; email client for managing replies to emails from underwriters to intermediaries.

InMailXpert is structured in several dedicated application domains, tasks, processes, records and organizer and is made up of: two frontends, an operational one for users and an administration one; API layers that give access to all the software functionalities; dedicated workers for email download, iteration with OpenAI, and other functionalities. The front-end part is characterized by two web applications, one specialized for users' work activities which was built in the previously described micro-frontend logic and a graphic layout (UX/UI) which was designed for a user who must use this interface for most of the working day. The user interface is mainly made up of two sections, one with the list of tasks that can be viewed and searched in different ways and one dedicated to each work task. The interface dedicated to the single task provides all the functions necessary for processing in a single click because they are integrated into the same html page. This approach makes the use of the application by the underwriter efficient and intuitive, allowing him to quickly access the necessary information, integrate the missing information, and then proceed to create a proposal on Sales OverX through an integration based on Restful API. The second web application is represented by an administration front-end that allows carrying out the following functions: user profiling, configuration of operational processes, configuration of tasks in terms of processing outcomes, classification of tasks, configuration of the integration of automatic IT processes, for example email downloads, configuration of interactions with external artificial intelligence services for the classification and indexing of emails and contents thereof.

As regards the various application products, there are two modes of communication and acquisition of information by the middleware software layer 1: one involves an interface communication at the middleware level 125 with each middleware portion of the application products mentioned as APP1, APP2, APP3 ,..., APPn; another mode provides that the bidirectional communication takes place through a background or BackEnd tool or module 120 common to both the middleware portion of the application products APP1, APP2, APP3, ..., APPn, and to the middleware software layer 1, for example using a software product known as SIA JMIL, which will be dealt with herein below.

This software module 120 SIA JMIL is essentially an external system that performs accounting functions, that is to say a portfolio management module with which it is possible to manage life insurance branches (life and death, mixed life and damage products) and non-life (RE in general, Car - RC and CVT-, Marine, Bonds, Legal protection). In this case, it is used just for the non-life component.

The core of this compiler module 120 is an insurance-product processor, which with its rules engine implements accounting rules (for instance for the issuance of securities).

For the purposes of the present invention the module 120 is arranged to perform the task of managing the insurance accounting rules, which are used with the maximum flexibility guaranteed by the configurability of the module 1.

Similarly to the module 120, the system 1 can communicate with an external portion 140 of interaction blocks that enables the middleware software layer 1 to communicate with platforms external to the system 1 containing information on the identity of individuals who may be natural or legal persons. This ability of the system 1 is exploited to activate, when necessary, a verification procedure from an external source, such as for instance the certification of records through unique identification codes such as the SPID or VAT number by a direct channel verification census, as we will see later on in the description.

Advantageously, the middleware software layer 1 incorporates a database 50 of the relational type.

This database 50 is the database of Figure 2 already described above.

Still more advantageously, the database 50 is in bidirectional connection with a blockchain module 150 configured and adapted to ensure the certainty and confidentiality of the data relating to parametric products, and above all to issuing and managing parametric insurance products.

The module 150 is a concatenated block data structure whose integrity is ensured by the use of cryptography. More in detail, the technology used in the module 150 is part of the family of distributed ledgers, each of which can be read and modified by multiple nodes of a network. It is not required that the nodes involved know each other's identity or trust each other because, in order to ensure consistency between the various copies, the addition of a new block is globally regulated by a shared protocol. Once the new block is allowed to be added, each node updates its own private copy. The nature itself of the data structure ensures the absence of its future manipulation.

Basically, the use of the module 150 ensures the integrity of the data contained in the relational database used according to the invention for the modeling of parametric insurance products and related guarantees.

Furthermore, the module 150 is capable of managing parametric policies in a particularly effective way, by coding these policies in smart contracts created by using a Hyperledger fabric platform (from IBM), which allow the automatic settlement of claims in the event of a particular event certified by an oracle.

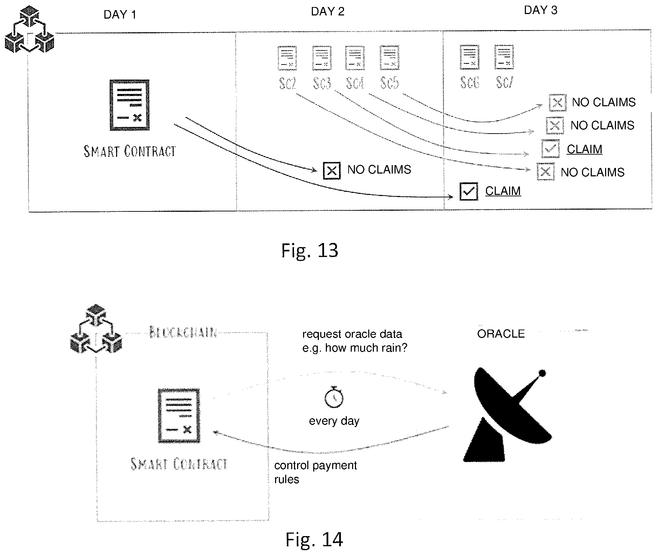

In particular, referring to figures 13 and 14, the blockchain module 150 is a digital information register decentralized on a network and structured as a chain of blocks. Each block contains all the previous ones and every tampering attempt automatically propagates on all subsequent blocks, effectively making the blocks, and therefore the information contained therein: transparent, immutable and generative (ethereum). "Smart contracts" are published within the network, that is, programs with the characteristics of a contract, which, in the case of parametric policies, contains the contracting data and payment rules. This contract is saved and executed on the blockchain and from that moment each smart contract verifies whether the event that leads to the automatic settlement of the reimbursement has occurred. On a daily basis, the processes of the blockchain, the smart contract, verify whether an event has occurred by asking the oracle for data. If so, the system communicates the event and the settlement data to the platform. The platform starts the process of opening an automatic claim on JMIL with automatic authorization for the settlement of the compensation. Oracle means a third party, independent from the parties, who provides the data necessary to verify the event covered by the contract. Possible oracles are weather services, disaster monitoring services, outage server monitoring services, transport delay tracking services.

Within the middleware software layer 1 there are some data processing modules that interact with each other and with the database 50. We will see the operation of each of these modules herein below.

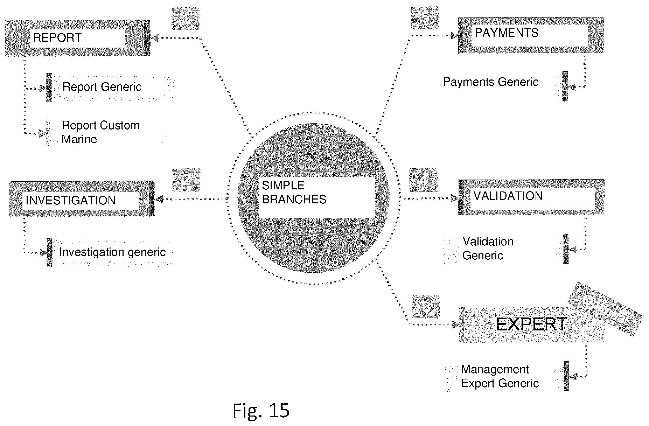

As shown in figure 15, an operational module, or web-based application, built on the middleware 1 is a claim management system, called claims OverX, which integrates an activity management engine, task manager, which allows managing operational processes which characterize the operations that specific users and adjusters have to carry out. It is used by the Company's Liquidators for the management and execution of all the activities/operations that characterize claims management in all its phases. Claims OverX is equipped with the following application modules:
- *Auth:* Login and user account
- *Diary:* List of changes;
- *Tasks list:* List of all activities for all open claims with priorities and visibility rules;
- *Tasks:* Management of the individual activities of the Adjusters, each activity is a task to be carried out;
- *Organizer*: module for planning activities and appointments for adjusters;
- *Process configurator*: tool for configuring operational processes.

Being able to manage every single work activity, from assignment to a user until its completion, Claims OverX enables having the management of the processes, compliance with operational deadlines and collaboration between users for the correct supply of activities.

Typically, the claims management process is made up of different operational phases, which specifically concern the elementary branches. Each of the phases is characterized by a specific operational workflow which is managed thanks to the adoption of a "task manager" which allows to configure the steps of the individual workflows, manage a work task for each phase, manage a father-child relation between the tasks of different processes, typically between claims investigation (father) and validation, expert engagement and payments (children), assign a task to a user which is defined based on his/her skills, monitor operational KPIs such as aging, backlog, average processing time, stock and workable stock to identify "bottlenecks" or work overloads.

From an implementation point of view, claims are a dedicated domain on which a dedicated front-end has been developed, a microservice which, for each phase of the process, is made up of a software module, that implements all the generic functions for each single phase, APIs and dedicated workers, dedicated kafka topics and a specific data model.

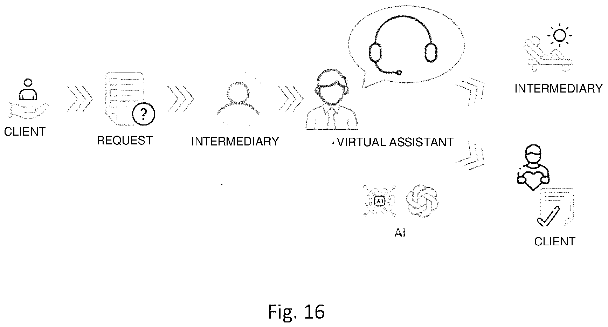

As shown in figure 16, a virtual assistant module is also built on the middleware 1, powered by artificial intelligence, capable of receiving any type of incoming input, such as, for example, Whatsapp messages, phone calls, other types of messages, and is able to understand the message, carry out the conversation with the interlocutor (intermediary or client), define all the necessary information about the client, configure a relevant insurance product, complete the missing data and configure the chosen insurance, define the product, provide, through integration with the middleware system, the corresponding insurance contract to be signed and archived.

Thanks to having devised and prepared the middleware software layer 1 of the present invention, it has been possible to provide a unified access mode for all operators and users who need to get in touch with the insurance services manager.

More particularly, with the system of the present invention it has been possible to provide for the use of a single identity identifier or Identity Provider System for the unified access by intermediaries, employees and collaborators of insurance-service managers, consultants, clients to services provided by the sole manager.

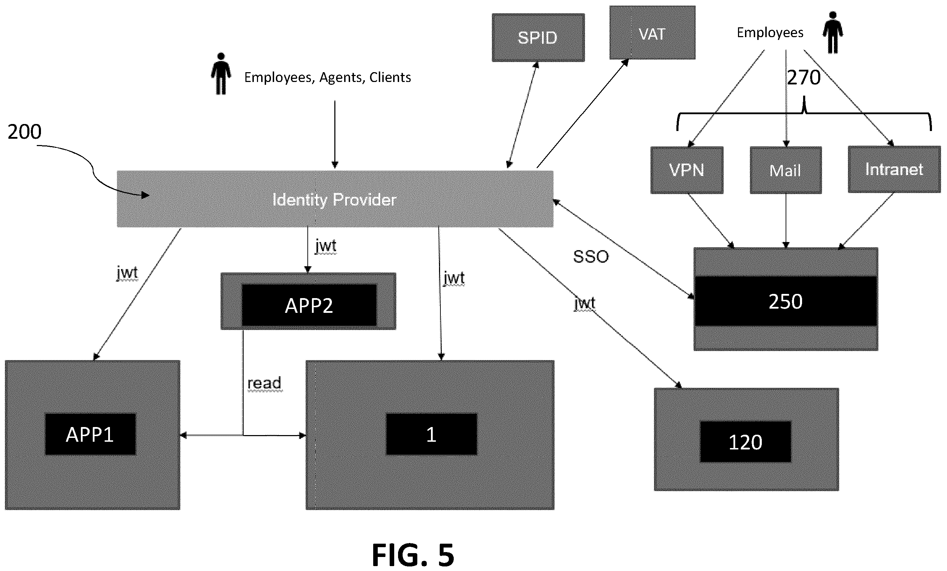

With particular reference to the example of Figure 5, it is possible to appreciate how the access scheme to the manager's services occurs through a single API Gateway block 200 which the various and heterogeneous communication means of the 110 range refer to (see Figure 3) and which is configured to offer the following functions:
- Census of users through a single user interface by a system administrator.
- Association of users to access individual applications, by specific assignment of a link in the respective fields of the database tables.
- Management of groups and association of groups to individual applications (for instance: a user registered in the Intermediaries group may have to access an insurance product but not another).
- Possibility to customize or have multiple registration/login/password recovery masks.
- Possibility to customize an authentication token with the specific information relating to groups, users, etc.
- Possibility to customize the rules relating to the password and in particular:
   ∘ Rules of length and presence of characters (Capital letters, special characters)
- Possibility to choose an alternative password recovery method. Recovery via an SMS message is also to be managed.
- Possibility of multi-factor authentication through verification with OTP via SMS or email.
- Possibility of registration with verification of email or telephone number.
- Possibility of self-generated registration from the system with the assignment and sending of a temporary password to the user.
- Allow the registration/login via social networks or common mail providers (Facebook, Gmail, Apple login).
- Allow the registration/login via the SPID code.
- Force the password to be changed after several months that can be configured in the system.
- Allow an administrator to reset the password.

This single Identity Provider 200 is associated with the middleware software layer 1 and can receive and exchange access data, for instance of the SSO (Single-Sign-On) type, even from an analogous identity control block 250 which may already be available at an insurance company.

A series of communication means 270 such as for instance a VPN, a mail server or an intranet may refer to this identity control block 250.

In Figure 5, downstream of the single Identity Provider 200, data flows sent to component blocks of the integrated system 100 of the present invention are highlighted.

Among these blocks there can be various application programs APP1, APP2, ..., APPn or the middleware software layer 1 or even the compiler 120 of Frontend policy contracts.

Some of these flows have a JSON Web Token (jwt) indicated alongside which is an access token standardized according to an RFC 7519 communication standard and which allows the secure data exchange between two parties. Basically, this token contains all the important information about an entity, so that no database query is required, and that the session does not have to be stored on the server (the so-called stateless session).

These JSON Web Tokens are therefore particularly popular in the authentication processes. The short messages can be encrypted and thus provide secure information on who is the sender and if he has the necessary access permissions. Users themselves come into contact with the token only indirectly, for instance by entering their username and password into a mask. The actual communication takes place between the various client-side and server applications.

It is known that so far and for a long time cookies have been used to authenticate users on the web. Still nowadays, this method works very well, especially with regard to certain applications. But sometimes more flexibility is needed. That is why in the context of the present invention it was preferred to use a JSON Web Token. Furthermore, this new standard is open and increasingly adopted by the major websites and applications.

This single Identity Provider block 200 provides for at least four different access modes:
- A public area, where anyone can browse publicly, and which contains general information sections and/or the institutional portal of the insurance-service manager.
- An authentication area, which is not yet public but contains the functions necessary for user login or registration. This area will be common for all of the application programs APP1, APP2, ..., APPn.
- An authenticated area, for instance via hot-link or OTP, where some authenticated sections will be accessible only temporarily through a unique access code (hot-link) or by entering an OTP code.
- An authenticated area, which actually corresponds to the middleware software layer 1, where all sections are accessible only after authentication and verification of the access permissions described briefly herein below.

Just by way of example, it should be noted that the adopted solution provides for several authorization layers in order to manage the authentication and visibility of the individual users' information at multiple levels. For instance, there is a first authentication layer that is configured to:
∘ Determine whether the credentials used for login are valid;
∘ Associate the single users to one or more groups of the system among the following (not exhaustive):
   ▪ Intermediary - Administrator
   ▪ Intermediary - Technical Users
   ▪ Management Direction - Administrator user
   ▪ Management Direction - Executive User
   ▪ Management Direction - Operational User
   ▪ Generic user
   ▪ Client - Legal Person
   ▪ Client - Natural Person
∘ Send this information to subsequent layers of the system via an encrypted jwt token.

However, a second authorization layer is also provided which, starting from the information received (user, groups), will enrich the jwt token with the permissions for single groups to the single functions of the system. This allows configuring the access permissions to sections of the middleware software layer 1 for some groups or within a certain section defined in the first authentication layer.

Advantageously, a third application authorization layer is even provided which, starting from the identification of the user and group on the first authentication layer, and only for the functions enabled in the second authorization layer, authorizes the visibility of the profiled information for each individual user.

Profiling is always respected and made possible at each level by the read-only of the jwt token that is exchanged in the various system's calls.

The users to be profiled can be divided into three main categories:
- *Users of the insurance-service manager* who deal with the definition, modification, and evolution of the insurance products present on the platform and will participate in the management workflow of the sale and policy issuance processes. They have access to all of the operational and commercial processes and can intervene in the management processes of the cases (underwritten, product manager, claims, back-office, etc.).
- *Intermediary Users* (agent, broker, sub-agent) who deal with the insertion of opportunities, estimates, and prospects on the platform and with perfecting the sales cycle of the policies.
- *Clients Users* who can access the sales front-end range 110 in which it will be possible in a completely digital way to enter data for the preparation of an estimate/ proposal and the issuance of a customized policy, as well as consulting own position.

The profile allows assigning the system functions to each user in a controlled and precise manner.

It should also be noted that the management carried out by the single Identity Provider block 200 is a management of record entities based on the entity Subject from which relations with other entities arise. In other terms, the block is capable of distinguishing between data relating to a natural person, a legal person, a public body, an association, or a sole proprietorship, by activating the access to external sources through the portion 140 of Figure 3.

In this context a verification procedure from an external source, such as for instance the certification of personal data through unique identification codes such as the SPID or VAT number by a direct channel verification census, has been suitably adopted, as illustrated in Figure 3. This peculiarity of the system is particularly valuable for managing parametric policies.

In this regard, the system of the present invention also provides for capturing and saving documents or information recovered from such external sources and not yet contained in the database 130 of the records.

Basically, for a natural person in the system it is sufficient to start from a basic data that can simply be the fiscal code of the subject to be registered in order to start a procedure that benefits from an external verification (admitted as formal according to the criteria established by the M.D. no. 345 of 23/12/1976) carried out completely automatically by the system 1 by querying an external database that contains the SPID code.

As far as legal persons are concerned, for the system 1 it is sufficient to have the VAT number.

As it is well known, the VAT number is a sequence of eleven digits that uniquely identifies a person who carries out a business and non-business activity, relevant for the purposes of indirect taxation (VAT).

Each tax subject of the European Union is recognizable from its VAT Number, consisting of the initials of the country of origin (for example IT for Italy, DE for Germany, ES for Spain, PT for Portugal) and an alphanumerical or numerical sequence, variable from country to country.

Once the VAT number has been inserted, the system also provides for an automatic filling in function of the many fields such as: Company Name and Activity Start Date, for instance through an external automatic connection to the database of the Revenue Agency where the system can retrieve the state, the activity start date, and any dates of suspension/termination, the information (if any) if the VAT number belongs to a VAT group or a participant in a VAT group.

Basically, through an automatic data entry function, the system is able to retrieve as many data as possible from external sources in order to prefill in the front-end fields, which in any case must be validated and confirmed by the user.

Similarly to the case of the natural person, in the particular case in which a subject is already present in the record of the database 130, by selecting the correct name from the search results, all the Front-End fields will be populated with the data already present in the archive.

Advantageously, the relational table management of the database 130 also allows information on the links and relations among users to be stored, if relevant. More particularly, the system 1 allows managing any type of "father/child" relation among natural persons and/or legal persons and, when in this particular sector the type of bond is a "delegation", it is necessary to define the limits which the delegation is subject to.

During the detail analysis and based on the links registered, the system develops the existing relations among a group of people or among legal persons or allows defining the attributes that will have to be managed for each type of link.

The modeling of the data contained in the database 50 also allows managing the so-called Conventions, that is to say the particular and/or more advantageous policy conditions for a specific group of subjects.

The conditions of the Conventions can also be defined and cataloged in relational tables and linked to insurance products.

It is important to note that, combined with a certain agreement, a policy text or template must be provided which describes the conditions of the services provided for in the policy. The details on the services can also be managed through clauses dedicated to the Conventions.

The diagram of Figure 6 shows a simple schematic example of a table structure contained in the database 50 which relates the insurance agreements with the related agreement conditions with the related policy templates and insurance products.

More in detail, the method for the definition and automated processing of non-standard insurance contracts according to the present invention uses the structure of the electronic system 100 and of the software 1 previously described and operates through workflows which are illustrated herein below.

More particularly, however, workflows of the iBPM type will be used, that is, of the iBusiness Process Management type, which actually manage the parallel execution of many independent workflows for the parametric management of processes, as well as in conjunction with the Artificial Intelligence.

The method of the present invention is therefore based on the use of a data processing system of the iBPM Workflow type in which each process flow evolves from one action to another based on rules and constraints, thus making the management conditioned. For instance, the rights to use the transitions from one state to a subsequent state are managed at the profiling level so that each state, transition, action can be connected to a service or group of services that interact with users and data.

But let us go in order.

The diagram in Figure 7 always illustrates the organization of information at a table level in order to allow an effective and efficient management of business processes and those supporting the latter.

The type of these tables is self-explanatory. It is only be noted that the specific Participant table represents the Business role that a User, whatever his profile, exercises in the Workflow process.

The Workflow table represents the record of the workflows recorded by the system 1. Therefore each Process corresponds to a Workflow that governs it based on predetermined rules during the construction phase of the database 50.

To optimize the management of workflow processes, the processes can be created from scratch or copied and modified.

The workflows evolve as a transition among states. A state represents the value of a process' object at a given time, in terms of value to the business. In the case of the insurance field, the states can be for instance: in progress, awaiting validation, defined, trashed, transformed into a policy, etc. Actions and Transitions can be linked to a state. Each state has two transitions, one in input and the other in output, except for the initial and final states which only have the outgoing transition and the incoming transition, respectively.

The actions of a workflow represent activities that the process carries out as a result of assumption of a state by an object. Actions of a workflow state are usually activities on the portfolio and do not have an immediate effect on the users, but on the data. In a service architecture, actions are made explicit by calling one or more services.

The passage of state, the activation of actions and transitions may be conditioned by the presence of rules or constraints. In the presence of a constraint, for instance, the change of state cannot occur, and the transition cannot take place until the condition of the constraint is not removed. For instance, the renewal of a policy cannot take place in the presence of at least one installment or receipt in a state of outstanding payment. Furthermore, a claim cannot be assessed in the presence of unpaid receipts or previous installments. Or a claim cannot be settled in the absence of signature or endorsement by a decisive Participant in the settlement workflow, and so on.

There is also the concept of a task, i.e. a task that a user can be assigned to, such as for instance responding to a form.

Should a change of state lead to the assignment of a task to a specific user or group, the system 1 provides for the possibility of contacting this user through one of the various communication means provided in the Frontend range 110 of Figure 3.

Only by way of indicative example, a possible list of tasks can be the following:
- Consultation and approval of a policy proposal
- Approval of a contractual clause
- Approval of issuance in case of derogation
- Reporting information task
- Information completion task for an intermediary

As it can be easily understood, these tasks provide for the possibility of interaction between the system 1 according to the invention and the various users based on access preferences which can in turn be contained in the profiling tables.

Returning to the mode through which the method of the present invention achieves the intended purposes, it should be noted that the technical modeling phase of the product structure, including the management of the guarantee attributes and the questionnaire to be submitted to the user/client, allowed defining a data structure which the system can draw on to successively evolve to develop new relations among data.

The peculiar feature of the proposed model is the ability to easily manage, and in the absence of programming, practically any insurance product against damage to property and person. For this reason, the model is characterized by numerous record tables and as many associative tables that allow extreme flexibility of use.

The model underlying the method essentially provides for at least two networks of tables in connection to each other: a relational network relating to the insurance product and the other one relating to the contractual clauses.

The product represents a primary entity of the diagram of the first relational network since all of the entities of technical, managerial, and commercial nature relate thereto.

A specific "durations" table represents the solution to manage different durations for different products. Indeed the duration regulates the expiry dates of all of the guarantees combined with an insurance product.

Another table, on the other hand, represents a set of questions aimed at gathering general and technical information that is useful and necessary for the estimate of a certain risk.

As for the second relational network on the contractual clauses, it contains the narrative of the general, special, public, and private conditions of products and policies. It has been designed in such a way as to allow both the available clauses and the customized specific ones created on particular needs, but which can be made public and available for subsequent occasions thanks to the learning expansion work of the Artificial Intelligence.

Let us now see an example of application of what has been previously illustrated.

Referring to the example of Figure 8, the first macro-block 20 of the integrated system 100 is capable of generating a new insurance product based on the existing components, namely tables and relations among tables of databases 50 and 130.

The system 1 will connect the components following the logics and relations of the data model.

Figure 8 shows that the system 1 evolves from a state in which it is required to create a new product to a state in which it selects the guarantees to be included into that product, moreover it selects the items to be inserted and can use a standard clause already present in the database 50 by selecting the policy movements for that product, as well as the duration and splitting.

However, the guarantees selection phase assumes that guarantees are suggested based on certain rules among guarantees. All this if the insurable items are compatible with the guarantees.

Eventually, the system checks the completeness of the product and closes it.

In the example of Figure 9, the system goes even further.

This is the case, for instance, in which the macro-block 20 creates the object product and creates a link or links the product with components provided for by the data model by accessing the records of each entity. The system 1 through the portion of macro-block 20 suggests the Entities based on the existing relations defined in the same model, but unlike the previous case the system will suggest contextual sessions in which the macro-block 20 can create and link the new object of the Data Model to the Product being composed.

See for example in Figure 9 the states in which the policy movements for the product are selected and a new type of movements can be created.

Similarly, the selection of duration and splits allows you to create a new duration and/or split.

The same happens in the coupling phase of a questionnaire in which a new questionnaire can be defined and created, as well as it is possible to create a new type of insurable item among those compatible for guarantee.

The modification of a product requires a state compatible with the modification and, if admissible, the macro-block 20 has the right to modify all the relations between the Product and the components thereof that are not linked to an already existing portfolio.

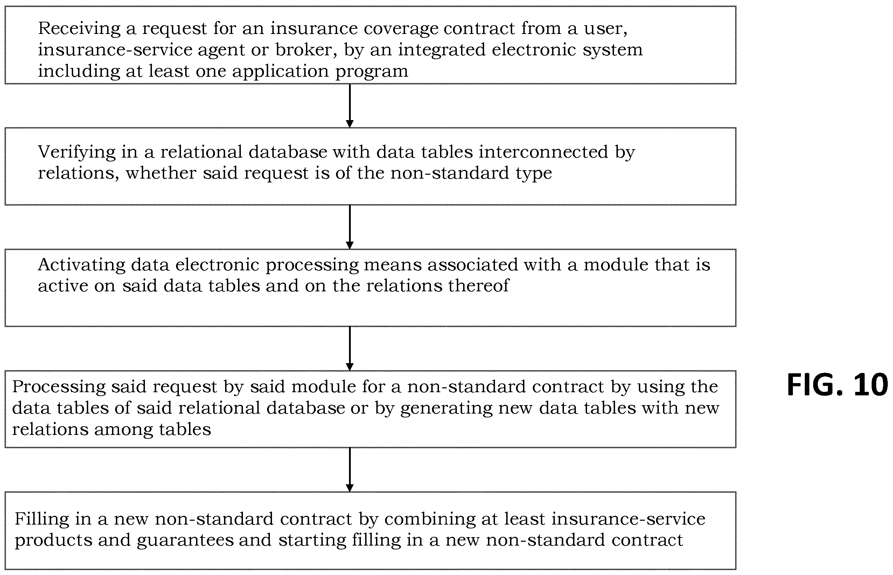

Basically, the method of the present invention evolves with state transitions that are schematized in the flow diagram of Figure 10 and that can be summed up as follows:
The method of the present invention allows the definition and automated processing of non-standard insurance contracts, comprising the phases of:
- receiving a request for an insurance coverage contract from a user, insurance-service agent or broker, by an integrated electronic system (100) associated with data communication means (110) or application programs (APP1, APP2, APP3, ..., APPn) of insurance services;
- verifying in a relational database (50), with data tables interconnected by relations, whether said request is of the non-standard type;
- activating data electronic processing means (300) associated with a module (400) operating as Data Lake in order to verify the existence of a product to support the needs identified, following this verification;
- in the negative case, processing by access to said module (400) said request for a non-standard contract using the data tables of said relational database (50) or by generating new data tables with new relations among tables;
- filling in a new non-standard contract also by accessing said module (400) to combine at least insurance-service products and guarantees and starting filling in a new non-standard contract.

From the previous description it clearly derives that the system and method of the present invention solve the technical problem and achieve numerous advantages, the first of which is certainly given by the fact that it is possible to configure a non-standard type policy substantially tailored to the user and with a time frame that can be defined as time to market.

Furthermore, it is clear that the platform described is OverX software and was designed with the aim of being robust, scalable, extensible, cloud-native, with low lock-in from external vendors, and component-based. The platform implements multiple techniques that allow it to respond to robustness requirements understood as high reliability of services, guarantee of data protection, redundancy of services, support for infrastructures designed with disaster recovery and geographical distribution systems. The design of the architecture according to the "Domain Driven Event" approach, the implementation of microservices and the use of latest generation technologies, such as application virtualization and the use of a backbone based on event management (kafka), guarantee the scalability of each individual software component according to business needs and the use thereof. Furthermore, the platform guarantees extensibility both in terms of increasing functionality and functional areas to be managed, and in terms of adding new architectural software components necessary to satisfy specific areas. The platform was built in such a way that it can be hosted by the main cloud providers with the aim of natively exploiting the managed services they offer.

## Claims

1. Integrated electronic system (100) for the definition and automated processing of non-standard insurance contracts, of the type comprising:
- data communication means (110) for receiving a request from a user, insurance-service agent or broker;
- at least one database (130) containing at least records of users, insurance-service agents or brokers;
- a plurality of different application programs (APP1, APP2, APP3, ..., APPn) associated with said communication means (110), for managing insurance services accessible by said users and agents or brokers;
- data processing means (300) for said application programs (APP1, APP2, APP3, ..., APPn), **characterized in that** it further comprises:
- a relational database (50) associated with said database (130) and containing insurance-product data tables interconnected by relations;
- a programming interface (115) configured to acquire said request from a user, insurance-service agent or broker;
- a module (400), associated with said processing means (300), for identifying a request for a non-standard contract and for processing said request by using said data tables or by generating new data tables with new relations among tables;
- said module (400) being capable of defining and producing a new non-standard insurance contract further to said request from a user, insurance-service agent or broker by combining insurance-service products and guarantees, based on said data tables of insurance products interconnected by relations or based on said new data tables with new relations among tables.

2. Integrated electronic system (100) according to the previous claim, **characterized in that** it comprises, a macro-block (20) or product engine capable of creating a new product using existent components, creating a new product by creating new components and duplicating an existing product, according to the cloning logic using basic entities which make an insurance product configurable, such as questionnaires and checklists for example data collection module, made up of a plurality of panels, several questions, a stipulation questionnaire, management of the dynamic attachments, policy documents based on dynamic templates are present on each panel.

3. Integrated electronic system (100) according to the previous claim, **characterized in that** said macro-block (20) comprises a document composition tool module, which is able to manage the insurance contracts pertaining the new products in real time, starting from a database of chosen and validated clauses accessible by subscribers for insertion and use.

4. System (100) according to any one of claims 1-3, wherein said relational database (50) contains tables relating to at least: insurance products, guarantees, attributes of such guarantees and contractual clauses, having relations with data of said records.

5. System (100) according to any one of claims 1-4, wherein said relational database (50) is associated with a blockchain module (150) configured and able to guarantee the managing of the parametric product.

6. System (100) according to any one of claims 1-5, wherein said module (400) is part of a middleware software layer (1) configured at an insurance-service manager and also provided with a plurality of communication means compatible at the middleware level with the different application programs (APP1, APP2, APP3, ..., APPn).

7. System (100) according to claim 1, wherein said programming interface (115), said module (400), and said relational database (50) are incorporated in a middleware software layer (1) configured at an insurance-service manager.

8. System (100) according to claim 5, wherein said programming interface (115) is configured as API Gateway with a plurality of interface applications capable of exchanging data in a format compatible with said data communication means (110).

9. System (100) according to any one of claims 6-8, **characterized in that** said software layer (1) is provided with a workflow engine, an access to a blockchain and an access to a database pre-populated with all the data relevant for risk estimation and contract subscription.

10. System (100) according to claim 1, **characterized in that** it comprises a single block (200) of identity identification of said users, agents or brokers which said data communication means (110) refer to and which uses Jason Web Tokens (jwt) for access authentication.

11. System (100) according to claim 1, wherein said single block (200) of identity identification provides for a verification procedure from an external source, such as for instance the certification of personal data through unique identification codes such as the SPID or VAT number by a direct channel verification census.

12. System (100) according to claim 1, wherein a blockchain module (150) is specifically configured and adapted to issue parametric policies by using a platform configured and operating based on blockchain networks.

13. System (100) according to any one of the previous claims, **characterized in that** it comprises a modular incoming mail system (InMailXpert) powered by an artificial intelligence engine, which is capable of:
automatically receiving and reading mail, including the key elements of the content, both in the mail and in the attachments;
automatically replying to said emails;
classifying and organizing the received emails into activities, new or associated ongoing negotiations and displaying the resulting activity:
completely processing incoming mail until a fully digital supply contract file to be digitally signed is obtained.

14. System (100) according to any one of the previous claims, **characterized in that** it comprises a virtual assistant module powered by the artificial intelligence, capable of
receiving incoming input, such as messages and phone calls;
understanding the message;
carrying out a conversation with the interlocutor (intermediary or client);
defining all the necessary information about the client;
configuring a relevant insurance product;
completing the missing data and configuring the chosen insurance,
defining the product,
providing the corresponding insurance contract to be signed and archived.

15. Method for the definition and automated processing of non-standard insurance contracts and the final output of related policies, which involves the receipt of a processing request of an insurance coverage contract by a user, insurance-service agent or broker, by means of the integrated electronic system (100) according to claims 1-14 associated with data communication means (110) or application programs (APP1, APP2, APP3, ..., APPn) of insurance services, **characterized in that** it comprises the following steps:
- the configuration of an intermediate software product (1) installed at a manager of new insurance services and comprising a macro-block (20) or product engine capable of generating new insurance products on the basis of components or duplicates of components of an existing product or with the creation of new components, populating a relational database (50);
- receiving said processing request via a communication interface (115) of said intermediate software product (1) configured with a plurality of interface applications (API) capable of exchanging data in a format compatible with said data communication means (110);
- the identification of said processing request with a subsequent activation of said macro-block (20);
- the processing of a new insurance contract using a form (400) capable of defining the new contract on the basis of said request using insurance product data tables interconnected by relations and on the basis of new data tables with new relations between tables contained in said relational database (50);
- the start of a verification procedure from an external source, by means of an identity identification block (200) associated with said intermediate software product (1), which provides for a certification of personal data by means of unique identification codes of a natural or legal person before the issuance of said new insurance contract.

16. Method according to claim 15, wherein said relational database (50) contains tables relating to at least: insurance products, guarantees, attributes of such guarantees and contractual clauses, having relations with said records.

17. Method according to claim 16, wherein said relational database (50) is associated with a blockchain module (150) configured and adapted to ensure the confidentiality of the data contained in the relational database (50).

18. Method according to claim 16, wherein said request is received from a single block (200) of identity identification which provides for a further verification procedure from an external source based on a personal data certification by unique identification codes of a natural or legal person.

19. Method according to claim 16, wherein said processing step by access to said module (400) occurs in a middleware software layer (1) installed and configured at an insurance-service manager and also provided with a plurality of communication means compatible at the middleware level with the different application programs (APP1, APP2, APP3, ..., APPn).

20. Method according to claim 16, wherein a blockchain module (150) is specifically configured and adapted to issue parametric policies by using a platform configured and operating based on Artificial Intelligence.
